# EUROPEAN PATENT SPECIFICATION

(11) **EP 4 151 941 B1**
(45) Date of publication and mention of the grant of the patent: **22.10.2025**
(21) Application number: 21803379.3
(22) Date of filing: 04.05.2021
(51) Int. Cl.: F28C 1/02, F25B 49/02, F04D 29/36, F04D 29/058, F25B 25/00, F04D 29/26, F04D 1/00, F25B 1/053, F04D 19/00, F04D 17/10, F03D 9/00, F04D 29/05, F28C 1/00, F03D 15/00, F03D 1/06, F03D 9/25, F28F 25/00, F28F 25/06, F04D 27/00, F04D 29/051

(54) **COOLING TOWER AND CHILLER SYSTEM COMPRISING SAME**
KÜHLTURM UND KÜHLSYSTEM DAMIT
TOUR DE REFROIDISSEMENT ET SYSTÈME DE REFROIDISSEMENT COMPRENANT CELLE-CI

(30) Priority: 11.05.2020 KR 20200055940
(43) Date of publication of application: 22.03.2023
(73) Proprietor: LG Electronics, Inc., Yeongdeungpo-gu Seoul 07336 (KR)
(72) Inventor: CHOI, Dongkyoo, Seoul 08592 (KR); PARK, Wankyu, Seoul 08592 (KR)
(74) Representative: Vossius & Partner Patentanwälte Rechtsanwälte mbB
(86) International application number: PCT/KR2021/005590
(87) International publication number: WO 2021/230553

(56) References cited:
- JP-A- 2007 100 583
- KR-A- 20110 131 466
- KR-A- 20140 083 353
- KR-B1- 101 024 826
- KR-B1- 101 024 826
- KR-B1- 101 338 641
- KR-U- 20100 002 479
- US-A1- 2014 244 051

## Description

### BACKGROUND

### Technical Field

The present disclosure relates to a cooling tower and a chiller system including the same. More particularly, the present disclosure relates to a cooling tower capable of generating energy during a non-operation time.

### Background Art

In general, a chiller system, which supplies cold water to a cold water consumer, cools cold water by exchanging heat between a refrigerant circulating in a refrigeration system and cold water circulating between a cold water consumer and the refrigeration system. Such a chiller system is a large-capacity facility and may be installed in a large-scale building.

Patent Document 1 discloses a cooling tower that cools cold water through heat exchange between a refrigerant expanded in a compressor, a condenser, an evaporator, and the evaporator 400 and the cold water.

Refrigerators or industrial heat exchangers operated in conventional air conditioning equipment and freezing and refrigerating devices involve waste heat to be removed, and in order to remove waste heat, waste heat should be discharged to the atmosphere using a cooling medium.

In general, a cooling tower that cools waste heat using forced ventilation air of a blowing fan may include an evaporative cooling tower, an air cooling type cooling tower(condenser), and an outdoor unit.

A cooling method is divided into air cooling, which performs sensible cooling by forcibly ventilating air in the atmosphere with a lower temperature than a fluid to be cooled, and evaporative cooling, which performs cooling using latent heat of evaporation based on contact between cooling water and air. Evaporative cooling type cooling towers are widely used because they have a greater cooling effect and are more economical than any other cooling system.

However, in the case of the conventional cooling tower, in the northern hemisphere, such as Korea, cooling towers are operated only in summer and cannot be used in spring, autumn, and winter, causing a problem of inefficient operation. KR 101 024 826 B1 relates to a power generating system using of cooling tower ventilation air.

### <Prior art literature>

(Patent Document 0001) Japanese Patent Laid-Open No. 2006-83923.

### SUMMARY

The present disclosure provides a cooling tower that is recycled as a device for generating energy while the cooling tower is not in operation in seasons other than summer.

The present disclosure also provides a cooling tower capable of performing both cooling cold water and generating power without significantly changing a structure of an existing cooling tower.

The present disclosure also provides a cooling tower capable of efficiently cooling cold water and efficiently generating power by adjusting a position and angle of a blowing fan when cooling cold water and generating power.

The problems of the present disclosure are not limited to the problems mentioned above, and other problems not mentioned will be clearly understood by those skilled in the art from the following description.

The invention is defined by independent claim 1. Further embodiments of the invention are defined by the dependent claims. In order to achieve the above objects, in the present disclosure, a blow fan providing a flow force of air to a heat exchanger is located inside a casing when a cooling tower is in operation, and is located outside the casing when the cooling tower is not in operation.

In addition, in the present disclosure, an angle of a blade of the blowing fan is different inside and outside the casing.

In an aspect, a cooling tower includes: a casing forming an air supply region, an exhaust region and a heat exchange region; an air supply port communicating with the air supply region and formed in the casing; an exhaust port communicating with the exhaust region and formed in the casing; a heat exchanger disposed in the heat exchange region; and a blowing and power generating unit providing a flow force to the air supply region and the exhaust region and generating power by an external force, wherein the blowing and power generating unit includes: a blowing fan; a rotating shaft having a first coupling portion and a second coupling portion to which the blowing fan is coupled; and a power generator motor rotating the rotating shaft or generating power according to rotation of the rotating shaft.

The first coupling portion may be located inside the casing, and2 the second coupling portion may be located outside the casing.

The second coupling portion may be located higher than the first coupling portion.

The rotating shaft may be disposed to be parallel to a vertical direction.

A portion of the rotating shaft may be located inside the casing, and another portion of the rotating shaft may be located outside the casing.

The first coupling portion and the second coupling portion may include a coupling groove to which the blowing fan is coupled.

The first coupling portion and the second coupling portion may include a coupling groove to which a fan coupling member passing through the blowing fan is coupled.

The power generator motor may be coupled to the rotating shaft.

In addition, the cooling tower may further include: a first pulley shaft-coupled the power generator motor; a second pulley shaft-coupled to the rotating shaft; and a belt coupled to the first pulley and the second pulley to provide a rotational force between the first pulley and the second pulley.

A height of the first pulley and the second pulley may be higher than that of the first coupling portion and the second coupling portion.

A height of the first pulley and the second pulley may be higher than the first coupling portion and lower than the second coupling portion.

The first coupling portion may be located inside the casing, and the first pulley, the second pulley, and the second coupling portion may be located outside the casing.

The blowing fan may be coupled to the first coupling portion when heat exchange is required in the heat exchanger, and coupled to the second coupling portion when heat exchange is not required in the heat exchanger.

The blowing fan includes: a hub selectively coupled to the first coupling portion or the second coupling portion of the rotating shaft and having a plurality of pin coupling portions; a plurality of blades generating a flow force; and a fastening pin connected to one end of each blade and coupled to the pin coupling portion.

The fastening pin may have at least four surfaces along a circumference with a longitudinal direction of the fastening pin as an axis, and the pin coupling portion may be a groove having a number of surfaces corresponding to the fastening pin.

When the blowing fan is coupled to the second coupling portion, a horizontal area of each of the blades may be smaller than a vertical area of each of the blades.

The blowing fan may include a hub selectively coupled to the first coupling portion or the second coupling portion of the rotating shaft; and a plurality of blades coupled to the hub to generate a flow force.

The blowing fan may further include a fan fastening member fastened to the first coupling portion or the second coupling portion by passing through the hub.

The hub may further include a plurality of insertion grooves arranged to be spaced apart from each other along a circumference having a certain axis in a direction intersecting the rotating shaft, and each blade may further include at least two insertion pins spaced apart from each other by a separation distance that is the same as a diameter of a circumference defined by the insertion groove and inserted into the insertion groove.

In another aspect, a cooling tower includes: a casing forming a heat exchange region; a heat exchanger disposed in the heat exchange region; and a blowing and power generating unit providing a flow force to the heat exchange region and generating power by an external force, wherein the blowing and power generating unit includes: a blowing fan; a rotating shaft having a first coupling portion and a second coupling portion to which the blowing fan is coupled; and a power generator rotating the rotating shaft or generating power according to rotation of the rotating shaft.

Specific details of other embodiments are included in the detailed description and drawings.

### ADVANTAGEOUS EFFECTS

According to the magnetic bearing and compressor of the present disclosure, there are one or more of the following effects.

First, in the present disclosure, since the cooling tower cools a refrigerant in summer and generates electricity in other seasons, there is an advantage of cooling the room in summer and supplying electricity used in the room in other seasons.

Second, in the present disclosure, since the cooling tower is not left outdoors in the period except for the summer season but is used as a facility to generate electricity, there is an advantage of increasing utilization of the cooling tower and utilizing abundant wind resources outdoors in the seasons except for the summer season.

Third, in the present disclosure, since the blowing fan is moved to the inside and outside of the cooling tower and an angle of a wing of the blowing fan may be adjusted, there is an advantage of improving power generation efficiency, without reducing the cooling efficiency of a refrigerant.

Fourth, in the present disclosure, since the cooling tower simultaneously cools and generates power by adding a simple configuration, there is an advantage of improving durability of the cooling tower, while reducing the manufacturing cost.

The effects of the present disclosure are not limited to the above-mentioned effects, and other effects not mentioned will be clearly understood by those skilled in the art from the description of the claims.

### BRIEF DESCRIPTION OF THE DRAWINGS

FIG. 1 illustrates a chiller system according to an embodiment of the present disclosure.
FIG. 2 illustrates a structure of a compressor according to an embodiment of the present disclosure.
FIG. 3 is a block diagram illustrating a relationship between components connected to a controller.
FIG. 4 is a view illustrating a cooling tower according to an embodiment of the present disclosure.
FIG. 5A is an exploded view of a blowing fan and a rotating shaft of FIG. 4.
FIG. 5B is a view illustrating a state in which the blowing fan and the rotating shaft of FIG. 5A are coupled.
FIG. 5C is a view illustrating another state in which the blowing fan and the rotating shaft of FIG. 5A are coupled.
FIG. 6A is an exploded view of a blade and a hub of FIG. 4.
FIG. 6B is a view illustrating an example in which the blade and the hub of FIG. 6A are coupled.
FIG. 6C is a view illustrating another example in which the blade and the hub of FIG. 6A are coupled.
FIG. 7A is an exploded view of a blade and a hub according to another embodiment of the present disclosure.
FIG. 7B is a view illustrating an example in which the blade and the hub of FIG. 7A are coupled.
FIG. 7C is a view illustrating another example in which the blade and the hub of FIG. 7A are coupled.
FIG. 8 is a view illustrating a cooling tower according to another embodiment of the present disclosure.
FIG. 9 is a view illustrating a cooling tower according to another embodiment of the present disclosure.

### DESCRIPTION OF EMBODIMENTS

Advantages and features of the invention and methods to achieve the same are described more fully hereinafter with reference to the accompanying drawings in which embodiments are shown. This invention may, however, be embodied in many different forms and should not be construed as limited to the embodiments set forth herein. Rather, these embodiments are provided so that this disclosure is thorough, and will fully convey the scope of the invention to those skilled in the art and this invention is defined by the scope of the claims. Like reference numerals refer to like elements throughout the present specification.

Spatially relative terms, such as "below", "beneath", "lower", "above", "upper", and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" may encompass both an orientation of above and below. The device may be otherwise oriented and the spatially relative descriptors used herein interpreted accordingly.

The terms used herein are for the purpose of describing the embodiments and are not intended to restrict and/or to limit the present disclosure. In the present disclosure, the singular expressions herein may include plural expressions, unless the context clearly dictates otherwise. The terms "comprises" and/or "comprising" do not exclude the presence or addition of one or more other components, steps, and/or operations.

Unless otherwise defined, all terms (including technical and scientific terms) used herein have the same meaning as commonly understood by one of ordinary skill in the art to which the invention belongs. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

In the drawings, the size of each element or a specific part of the element may be exaggerated, omitted, or schematically illustrated for convenience and clarity of a description. In addition, the size of each element does not entirely reflect the actual size of the element.

Hereinafter, embodiments of the present disclosure will be described with reference to the accompanying drawings.

Hereinafter, the present disclosure will be described with reference to the drawings illustrating a compressor according to the embodiments of the present disclosure.

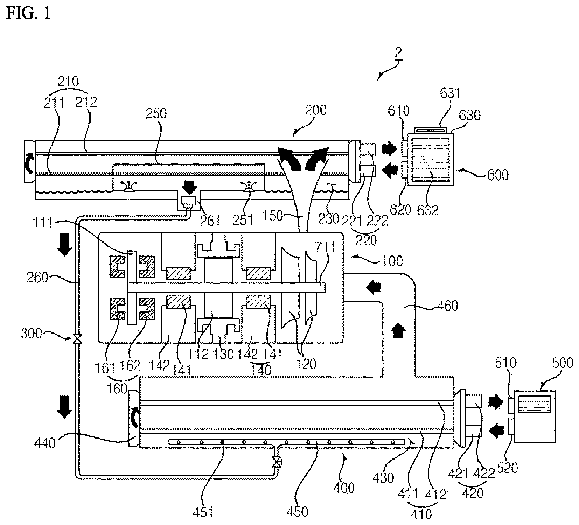

FIG. 1 illustrates a chiller system equipped with a compressor 100 of the present disclosure. Meanwhile, the compressor 100 according to an embodiment of the present disclosure not only functions as a portion of the chiller system, but may also be included in an air-conditioner, and may be included in any device that compresses a gaseous material.

Referring to FIG. 1, a chiller system 1 according to an embodiment of the present disclosure includes the compressor 100 configured to compress a refrigerant, a condenser 200 condensing the refrigerant by exchanging heat between a refrigerant compressed in the compressor 100 and cooling water, an expander 300 expanding the refrigerant condensed in the condenser 200, and an evaporator 400 formed to heat-exchange the refrigerant expanded in the expander 300 with cold water to cool the cold water with evaporation of the refrigerant.

In addition, the chiller system 1 according to an embodiment of the present disclosure further includes a cooling water unit 600 heating cooling water through heat exchange between the refrigerant compressed in the condenser 200 and cooling water and a cooling tower 500 cooling cold water through heat exchange between the refrigerant the expanded in the evaporator 400 and cold water.

The condenser 200 provides a place for exchanging heat between a high-pressure refrigerant compressed in the compressor 100 with cooling water introduced from the cooling water unit 600. The high-pressure refrigerant is condensed through heat exchange with cooling water.

The condenser 200 may be configured as a shell-tube type heat exchanger. Specifically, the high-pressure refrigerant compressed in the compressor 100 is introduced into a condensing space 230 corresponding to an internal space of the condenser 200 through a discharge flow path 150. In addition, the inside of the condensing space 230 includes a cooling water flow path 210 through which cooling water introduced from the cooling water unit 600 may flow.

The cooling water flow path 210 includes a cooling water inlet flow path 211 through which cooling water is introduced from the cooling water unit 600 and a cooling water outlet flow path 212 through which cooling water is discharged to the cooling water unit 600. The cooling water flowing into the cooling water inlet flow path 211 exchanges heat with the refrigerant inside the condensing space 230 and is introduced into the cooling water outlet flow path 212 through a cooling water connection flow path 240 provided at one end inside the condenser 200 or outside.

The cooling water unit 600 and the condenser 200 are connected via the cooling water tube 220. The cooling water tube 220 may be formed of a material such as rubber to not only serve as a passage through which the cooling water flows between the cooling water unit 600 and the condenser 200 but also to prevent leakage to the outside.

The cooling water tube 220 includes a cooling water inlet tube 221 connected to the cooling water inlet flow path 211 and a cooling water outlet tube 222 connected to the cooling water outlet flow path 212. Referring to the flow of the cooling water as a whole, cooling water after heat exchange with air or liquid in the cooling water unit 600 is introduced into the condenser 200 through the cooling water inlet tube 221. The cooling water introduced into the condenser 200 sequentially passes through the cooling water inlet flow path 211, the cooling water connection flow path 240, and the cooling water outlet flow path 212 provided in the condenser 200 to exchange heat with the refrigerant introduced into the condenser 200 and then passes through the cooling water outlet tube 222 to be introduced into the cooling water unit 600 .

Meanwhile, the cooling water that has absorbed heat of the refrigerant through heat exchange in the condenser 200 may be air-cooled in the cooling water unit 600. The cooling water unit 600 includes a cooling water inlet pipe 610 that is an inlet through which cooling water that has absorbed heat through a main body 630 and the cooling water outlet tube 222 is introduced and a cooling water outlet pipe 620 that is an outlet through which cooling water after being cooled inside the cooling water unit 600 is discharged.

The cooling water unit 600 may use air to cool the cooling water introduced into the main body 630. Specifically, the main body 630 may include an air outlet 631
provided with a fan for generating a flow of air, through which air is discharged, and an air inlet 632 corresponding to an inlet through which air is introduced into the main body 630.

Air discharged from the air outlet 631 after heat exchange may be used for heating. The refrigerant after heat exchange in the condenser 200 is condensed and accumulated in a lower portion of the condensing space 230. The accumulated refrigerant flows into a refrigerant box 250 provided in the condensing space 230 and then flows into the expander 300.

The refrigerant is introduced into the refrigerant box 250 through a refrigerant inlet 251, and the introduced refrigerant is discharged through an evaporator connection flow path 260. The evaporator connection flow path 260 includes an evaporator connection flow path inlet 261, and the evaporator connection flow path inlet 261 may be located below the refrigerant box 250.

The evaporator 400 includes an evaporation space 430 in which heat exchange takes place between the refrigerant expanded in the expander 300 and cold water. The refrigerant that has passed through the expander 300 in the evaporator connection flow path 260 is connected to the refrigerant injection device 450 provided in the evaporator 400 and passes through a refrigerant injection hole 451 provided in the refrigerant injection device 450 to be spread evenly into the evaporator 400.

In addition, the evaporator 400 includes a cold water flow path 410 including a cold water inlet flow path 411 through which cold water is introduced into the evaporator 400 and a cold water outlet flow path 412 through which cold water is discharged to the outside of the evaporator 400.

Cold water is introduced or discharged through a cold water tube 420 in communication with the cooling tower 500 provided outside the evaporator 400. The cold water tube 420 includes a cold water inlet tube 421 that is a passage for cold water in the cooling tower 500 to be directed toward the evaporator 400 and a cold water outlet tube 422 that is a passage for cold water that has undergone heat exchange in the evaporator 400 to be directed toward the cooling tower 500. That is, the cold water inlet tube 421 communicates with the cold water inlet flow path 411, and the cold water outlet tube 422 communicates with the cold water outlet flow path 412.

Referring to the flow of cold water, cold water passes through a cold water connection flow path 440 provided at one end inside the evaporator 400 or outside the evaporator 400 through the cooling tower 500, the cold water inlet tube 421, the cold water inlet flow path 411, and then is introduced into the cooling tower 500 again through the cold water outlet flow path 412 and the cold water outlet tube 422.

The cooling tower 500 cools cold water through the refrigerant. The cooled cold water absorbs heat from the air in the cooling tower 500 to enable indoor cooling. The cooling tower 500 includes a cold water discharge pipe 520 communicating with the cold water inlet tube 421 and a cold water inlet pipe 510 communicating with the cold water outlet tube 422. The refrigerant that has undergone heat exchange in the evaporator 400 flows back to the compressor 100 through a compressor 100 connection flow path 460.

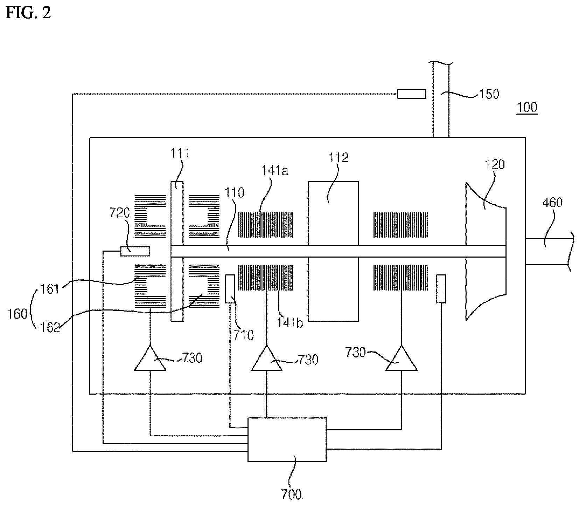

FIG. 2 illustrates a compressor 100 (or a turbo compressor) according to an embodiment of the present disclosure.

The compressor 100 according to FIG. 2 includes one or more impellers 120 that suck the refrigerant in an axial direction Ax and compresses the refrigerant in a centrifugal direction, a rotating shaft 110 to which the impeller 120 and a motor 130 rotating the impeller 120 are connected, a bearing unit 142 including a plurality of magnetic bearings 10 supporting the rotating shaft 110 to be rotatable in the air and a bearing housing 142 supporting the magnetic bearing 10, a vibration measurement sensor 72 detecting a distance to the rotating shaft 110, and a thrust bearing 160 limiting vibration of the rotating shaft 110 in the axial direction Ax. In addition, the compressor 100 of the present disclosure may further include a vibration measurement sensor 72 measuring a vibration frequency of the discharge flow path 150.

The impeller 120 generally has one step or two steps, and may be have a plurality of steps. The impeller 120 is rotated by the rotating shaft 110 and serve to make the refrigerant have a high pressure by compressing the refrigerant introduced in the axial direction Ax by rotation in a centrifugal direction.

The motor 130 may have a rotating shaft 110 separate from the rotating shaft 110 and transfer a rotational force to the rotating shaft 110 by a belt (not shown), but in an embodiment of the present disclosure, the motor 130 includes a stator (not shown) and a rotor 112 to rotate the rotating shaft 110.

The rotating shaft 110 is connected to the impeller 120 and the motor 130. The rotating shaft 110 extends in a left-right direction of FIG. 2. Hereinafter, the axial direction Ax of the rotating shaft 110 refer to the left-right direction. The rotating shaft 110 preferably includes a metal to be movable by a magnetic force of the magnetic bearing 10 and the thrust bearing 160.

In order to prevent vibration in the axial direction Ax (left-right direction) of the rotating shaft 110 by the thrust bearing 160, the rotating shaft 110 preferably has a constant area in a plane perpendicular to the axial direction Ax. Specifically, the rotating shaft 110 may further include a rotating shaft 110 wing 111 providing sufficient magnetic force to move the rotating shaft 110 by the magnetic force of the thrust bearing 160. The rotating shaft 110 wing 111 may have a larger area than a cross-sectional area of the rotating shaft 110 in a plane perpendicular to the axial direction Ax. The rotating shaft 110 wing 111 may be formed to extend in a radial direction of the rotating shaft 110.

The thrust bearing 160 is formed of a conductor and has a coil wound thereon. The trust bearing 160 acts like a magnet by a current flowing through the wound coil. The thrust bearing 160 is provided adjacent to the rotating shaft 110 wing 111 extending in a rotation radial direction of the rotating shaft 110.

The magnetic bearing 10 supports the rotating shaft 110 in a radial direction intersecting an axial direction of the rotating shaft 110. The magnetic bearing 10 is formed of a conductor and has a coil wound thereon. The magnetic bearing 10 acts like a magnet by a current flowing through the wound coil.

The magnetic bearing 10 allows the rotating shaft 110 to rotate without friction in a state in which it is levitated in the air. To this end, at least three or more magnetic bearings 10 should be provided around the rotating shaft 110, and each coil should be installed to be balanced based on the rotating shaft 110.

The rotating shaft 110 is levitated in the air by magnetic force generated by each coil. As the rotating shaft 110 is levitated and rotated in the air, energy lost due to friction is reduced, unlike the related art invention in which a bearing is provided.

Meanwhile, the compressor 100 may further include a bearing housing 142 supporting the magnetic bearing 10.

Referring to the flow of the refrigerant, the refrigerant introduced into the compressor 100 through the compressor 100 connection flow path 460 is compressed in the circumferential direction by the action of the impeller 120 and then discharged to the discharge flow paths 150 and 150. The compressor 100 connection flow path 460 is connected to the compressor 100 so that the refrigerant flows in a direction perpendicular to a rotation direction of the impeller 120.

The thrust bearing 160 limits the movement of the rotating shaft 110 in the axial direction Ax vibration, and when a surge occurs, the trust bearing prevents the from colliding with other components of the compressor 100 while moving in a direction of the impeller 120.

Specifically, the thrust bearing 160 includes a first thrust bearing 161 and a second thrust bearing 162, and is disposed to surround the rotating shaft 110 wing 111 in the axial direction Ax of the rotating shaft 110. That is, the first thrust bearing 161, the rotating shaft 110 wing 111, and the second thrust bearing 162 are disposed sequentially in the axial direction Ax of the rotating shaft 110.

More specifically, the second thrust bearing 162 is located closer to the impeller 120 than the first thrust bearing 161, the first thrust bearing 161 is located farther from the impeller 120 than the second thrust bearing 161, and at least a portion of the rotating shaft 110 is located between the first thrust bearing 161 and the second thrust bearing 162. Preferably, the rotating shaft 110 wing 111 is located between the first thrust bearing 161 and the second thrust bearing 162.

Therefore, the first thrust bearing 161 and the second thrust bearing 162 may minimize vibration of the rotating shaft 110 in the direction of the rotating shaft 110 by the rotating shaft 110 wing 111 having a large area and the action of the magnetic force.

The vibration measurement sensor 72 measures movement of the rotating shaft 110 in the axial direction Ax (left and right direction. Of course, the vibration measurement sensor 72 may measure the movement of the rotating shaft 110 in the vertical direction (direction orthogonal to the axial direction Ax). Of course, the vibration measurement sensor 72 may include a plurality of vibration measurement sensors 72.

For example, the vibration measurement sensor 72 includes a first gap sensor 710 that measures a vertical movement of the rotating shaft 110 and a second gap sensor 720 that measures a horizontal movement of the rotating shaft 110. The second gap sensor 720 may be disposed to be spaced apart from one end in the axial direction Ax of the rotating shaft 110 in the axial direction Ax.

The refrigerant compressed by the impeller is discharged through the discharge flow path 150. The vibration measurement sensor 72 measures a vibration frequency of the discharge flow path 150, and provides a vibration frequency value to a controller 700 or a storage unit 740. The vibration measurement sensor 72 may be installed adjacent to the discharge flow path 150. The vibration measurement sensor 72 measures vibration of the discharge flow path 150 using an accelerometer or measures vibration of the discharge flow path 150 using various other methods.

According to the present disclosure, since damage is already applied to the compressor 100 when a surge occurs, a surge is recognized in advance before the occurrence thereof, and the surge is prevented in the stage before the surge occurs.

When the frequency of the discharge flow path 150 is detected, the measurement is more advantageous than detecting the vibration of the rotating shaft 110, and additional installation of equipment is convenient.

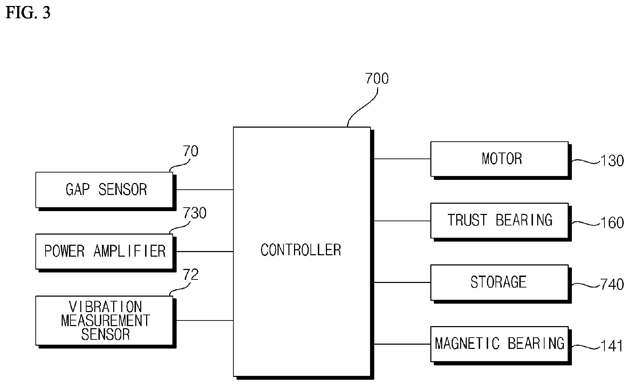

Referring to FIG. 3, the present disclosure may further include the controller 700 for executing a surge avoidance operation based on the vibration frequency measured by the vibration measurement sensor 72.

The controller 700 controls the power amplifier 730 amplifying a magnitude of a current applied to the vibration measurement sensor 72, the magnetic bearing 10, the motor 130, and the thrust bearing 160.

The controller adjusts the magnitude of the current applied to the magnetic bearing 10, the motor 130, and the thrust bearing 160 by controlling the power amplifier 730, and recognize a change in position of the rotating shaft according to a change in the magnitude of the current using the vibration measurement sensor 72.

The value measured by the vibration measurement sensor 72 is stored in the storage unit 740. Data such as the reference position C0, a normal position range (-C1 to +C1), and an eccentric position may be stored in the storage unit 740 in advance. When determining a surge occurrence condition later, whether to perform the surge avoidance operation may be determined by comparing the measured value with a value stored in the storage unit 740.

Specifically, when it is determined that the vibration frequency is out of a normal vibration frequency range, the controller 700 executes the surge avoidance operation.

The surge occurring in the compressor 100 is mostly due to rotation stall occurring due to the growth of flow separation. Since the magnetic bearing controls a position of the shaft, the magnetic bearing may shake the shaft for an extreme period of time without affecting the system, and an inverter product may be operated while avoiding a surge, when the flow separation may be managed before rotation stall occurs by controlling the number of revolutions of the compressor 100.

Since the flow separation grows in a direction that blocks the refrigerant flow path, it is possible to determine whether the flow separation grows based on a change in a blade passing frequency (BPF) value by analyzing a vibration component of the discharge flow path 150. In the present disclosure, surges are avoided by observing the growth of flow separation and removing the flow separation through control. The BPF may be defined as the product of the number of blades and a current operating frequency of the motor 130.

Here, a normal vibration frequency may be an experimentally determined value. As another example, when the vibration frequency of the discharge flow path 150 is lower than the BPF value, the controller 700 may determine that the vibration frequency is out of a normal vibration frequency range. As another example, when a state in which the vibration frequency of the discharge flow path 150 is lower than the BPF value continues for a predetermined time, the controller 700 may determine that the vibration frequency is out of the normal vibration frequency range.

Hereinafter, the cooling tower 500 for cooling cold water through heat exchange between a refrigerant expanded in the evaporator 400 and cold water will be described in detail.

In the present disclosure, the cooling tower 500 is recycled as a device for converting wind energy into electrical energy during a non-operation period of the cooling tower 500 in order to solve the problem that the cooling tower 500 is not operated in seasons except summer and left outdoors.

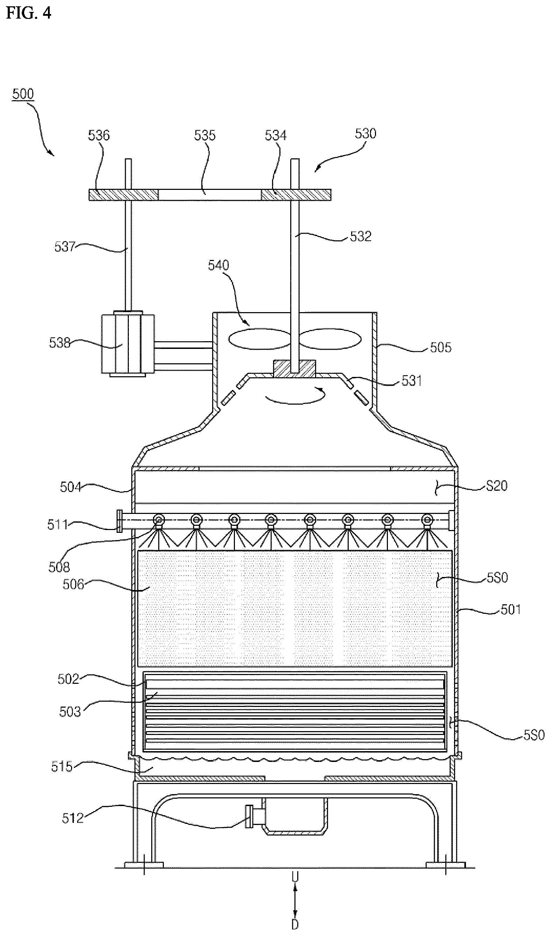

Referring to FIG. 4, the cooling tower 500 according to an embodiment of the present disclosure includes a casing 530 forming an air supply region S 10, an exhaust region S20, and a heat exchange region S30, an air supply port 502 communicating with the air supply region S 10 and formed in the casing 530, an exhaust port 504 communicating with the exhaust region S20 and formed in the casing 530, a heat exchanger disposed in the heat exchange region S30 and a blowing and power generating unit 530 providing a flow force to the air supply region S 10 and the exhaust region S20 and generating power by an external force
The cooling tower 500 of the present disclosure is preferably a counterflow suction ventilation type, but is not limited thereto.

The casing 530 forms the air supply region S 10, the exhaust region S20, and the heat exchange region S30. That is, the casing 530 forms the air supply region S10, the exhaust region S20, and the heat exchange region S30 therein. The casing 530 usually has a cylindrical shape.

The casing 530 is provided with the air supply port 502 and the exhaust port 504. The air supply port 502 is a space in which outside air flows into the inside of the casing 530 from the outside. The air supply port 502 is in communication with the air supply region S10. The air supply port 502 is preferably a hole formed along the circumference of the casing 530 on the side of the casing 530. The air supply port 502 may be provided with an air supply louver 203.

The exhaust port 504 communicates with the exhaust region S20. The exhaust port 504 is preferably a hole formed in the upper portion of the casing 530. An exhaust outlet portion 505 may be installed in the exhaust port 504. The exhaust outlet portion 505 may guide the air discharged through the exhaust port 504 and provide a space in which the blowing fan 540 is installed. Of course, the exhaust outlet portion 505 may be omitted depending on an embodiment.

The air supply port 502 and the exhaust port 504 may be installed at the same height in a horizontal direction, but the exhaust port 504 is preferably installed higher than the air supply port 502. Since the cold outside air coming in from the air supply is heated inside the casing 530 and naturally rises by convection to be discharged to the exhaust port 504, the burden on the blowing fan 540 may be reduced.

The heat exchange region S30 is disposed between the air supply region S10 and the exhaust region S20. That is, an internal space of the casing 530 between the air supply region S10 and the exhaust region S20 may be defined as the heat exchange region S30. A heat exchanger is disposed in the heat exchange region S30.

The heat exchanger may include various types of heat exchangers. Specifically, the heat exchanger may include a counterflow heat exchange unit 506 formed of a filler, a water spray main pipe (no reference numeral given) disposed above the heat exchange unit 506 to spray cooling water to the heat exchange unit 506 and including a cooling fluid inlet 511 guiding high temperature cooling water, a water spray unit 508 including a plurality of branch pipes (no reference numeral given) coupled to the water spray main pipe (not shown) and a plurality of water spray nozzles (no reference numeral given) coupled to the branch pipes (no reference numeral given), and an eliminator 507 provided on the water spray unit 508.

The casing 503 may include a water collecting tank 515 provided below the heat exchange unit 506 and a cooling fluid outlet 512 connected to the water collecting tank 215 to discharge cooled cooling water.

The blowing and power generating unit 530 provides a flow force to the air supply region S10 and the exhaust region S20 and generates power by external force.

The blowing and power generating unit 530 may include a blowing fan 540, a rotating shaft 532 to which the blowing fan 540 is coupled, and a power generator motor 538 rotating the rotating shaft 532 or generating power by rotation of the rotating shaft 532.

The power generator motor 538 may generate electric energy when the rotating shaft 532 is rotated by an external force, and may rotate the rotating shaft 532 when electricity is supplied. The power generator motor 538 may include an MG motor.

The power generator motor 538 and the blowing fan 540 may be shaft-coupled, or may be coupled by a belt 535 using a separate shaft.

The embodiment of FIG. 4 illustrates a structure in which the power generator motor 538 and the blowing fan 540 have different shafts and receive rotational force by the belt 535.

Specifically, the blowing and power generating unit 530 may further include a first pulley 536 shaft-coupled to the power generator motor 538, a second pulley 534 shaft-coupled to the rotating shaft 532, and a belt 535 coupled to the first pulley 536 and the second pulley 543 to transmit a rotational force between the first pulley 536 and the second pulley 534. The first pulley 536 is shaft-coupled to a driving shaft 537 of the power generator motor 538. The driving shaft 537 and the rotating shaft 532 may be disposed parallel to a vertical direction.

The first pulley 536, the second pulley 534, and the second coupling portion 532b may be located outside the casing 530. A portion of the rotating shaft 532 may be located inside the casing 530, and another portion of the rotating shaft 532 may be located outside the casing 530. The blowing fan 540 may be located inside the casing 530.

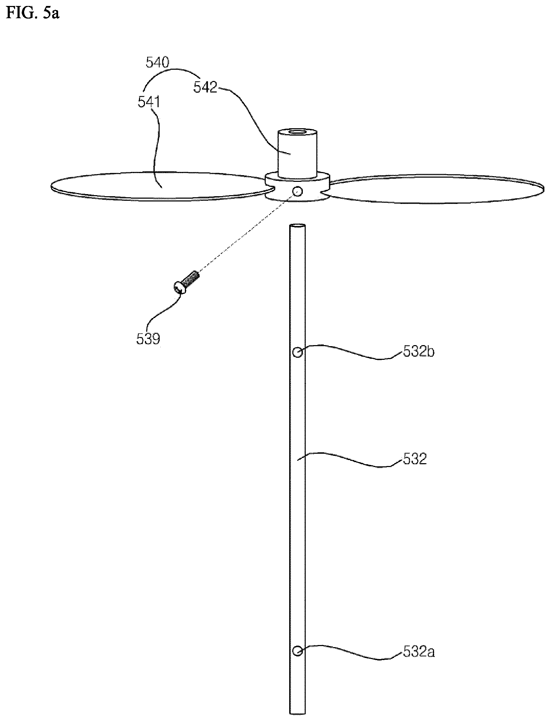

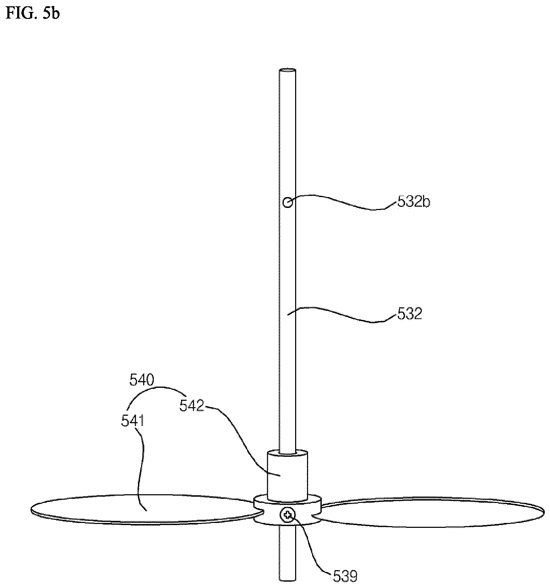

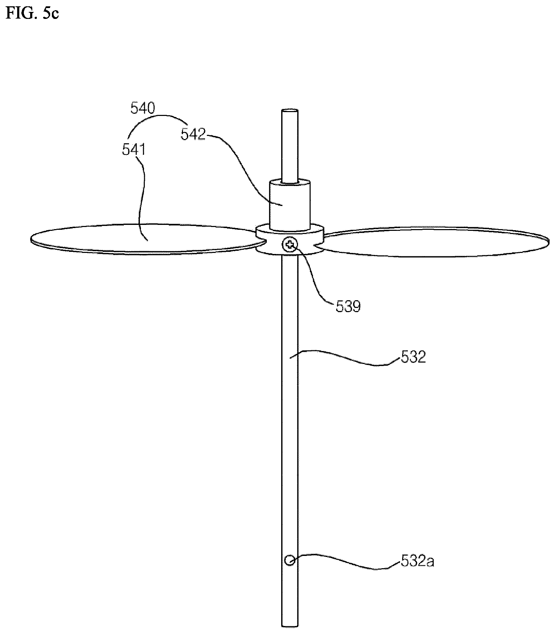

Referring to FIG. 5, the rotating shaft 532 has a coupling portion to which the blowing fan 540 is coupled, and is arranged to be parallel in the vertical direction. A portion of the rotating shaft 532 is located inside the casing 530, and another portion of the rotating shaft 532 is located outside the casing 530. This is because, when the rotating shaft 532 is disposed in a vertical direction, the position of the blowing fan 540 may be as high as possible during a non-operation period of the cooling tower 500 to maximize wind energy.

The rotating shaft 532 is rotatably coupled to the casing 530. Specifically, the rotating shaft 532 may be supported by an arm 531 extending from the casing 530. Of course, a bearing 505 may be coupled to the arm 531, and the rotating shaft 532 may be coupled to the bearing 505.

The rotating shaft 532 includes a first coupling portion 532a and a second coupling portion 532b to which the blowing fan 540 is coupled. The first coupling portion 532a and the second coupling portion 532b may be variously modified. For example, the first coupling portion 532a and the second coupling portion 532b may have a structure in which a hub 542 of the blowing fan 540 is coupled or a blade 541 of the blowing fan 540 is directly coupled.

Specifically, the first coupling portion 532a and the second coupling portion 532b may be coupling recesses to which the blowing fan 540 is coupled. The coupling recess may be a space in which the hub 542 or each blade 541 of the blowing fan 540 is press-fitted.

As another example, the first coupling portion 532a and the second coupling portion 532b may include a coupling recess to which a fan coupling member 539 passing through the blowing fan 540 is coupled. At this time, a screw recess may be formed inside the coupling recess.

The first coupling portion 532a is a portion to which the blowing fan 540 is coupled when the cooling tower 500 cools a refrigerant, and the second coupling portion 532b is a portion to which the blowing fan 540 is coupled when the cooling tower 500 converts wind energy into electrical energy.

The first coupling portion 532a may be located inside the casing 530, and the second coupling portion 532b may be located outside the casing 530. The first coupling portion 532a may be disposed in the exhaust port 504 or located in the exhaust outlet portion 505.

The second coupling portion 532b may be located higher than the first coupling portion 532a. The second coupling portion 532b is preferably located to vertically overlap the exhaust port 504 above the exhaust port 504.

A height of the first pulley 536 and the second pulley 534 may be higher than that of the first coupling portion 532a and the second coupling portion 532b.

When the first coupling portion 532a is located inside the casing 530 and the first pulley 536, the second pulley 534, and the second coupling portion 532b are located outside the casing 530, the structure of the existing cooling tower 500 is not changed, achieving advantages that a flow force, cooling performance, a size of the blowing fan 540, and the like of the cooling tower 500 are not changed.

The blowing fan 540 is coupled to the first coupling portion 532a when heat exchange is required in the heat exchanger, and coupled to the second coupling portion 532b when heat exchange is not required in the heat exchanger.

Specifically, as shown in FIG. 5B, the blowing fan 540 is coupled to the first coupling portion 532a when heat exchange is required in the heat exchanger. As shown in FIG. 5C, the blowing fan 540 is coupled to the second coupling portion 532b when heat exchange is not required in the heat exchanger (when electric energy is required).

The blowing fan 540 may include the hub 542 selectively coupled to the first coupling portion 532a or the second coupling portion 532b of the rotating shaft 532 and a plurality of blades 541 coupled to the hub 542 to generate a flow force.

The hub 542 is shaft-coupled to the rotating shaft 532, and has a larger diameter than the rotating shaft 532. Each blade 541 is disposed along the circumference of the hub 542. The blade 541 is rotated about the rotating shaft 532, thereby generating a flow force in the axial direction.

In addition, the blowing fan 540 may further include a fan coupling member 539 passing through the hub 542 to be fastened to the first coupling portion 532a or the second coupling portion 532b.

Since only the hub 542 only needs to be uncoupled and re-coupled when moving the position of the blowing fan 540, the structure described above is more convenient than when each blade 541 is directly coupled to the rotating shaft 532.

If only the vertical position of the blowing fan 540 is changed, the blade 541 is formed to provide a flow force in a vertical direction parallel to the rotating shaft 532, so the efficiency of generating wind energy may be lowered.

That is, since a probability that wind blows in a horizontal direction is higher than a probability that wind blows in the vertical direction from the top of the cooling tower 500, the power generation efficiency may be low even if the blowing fan 540 moves to the second coupling portion 532b..

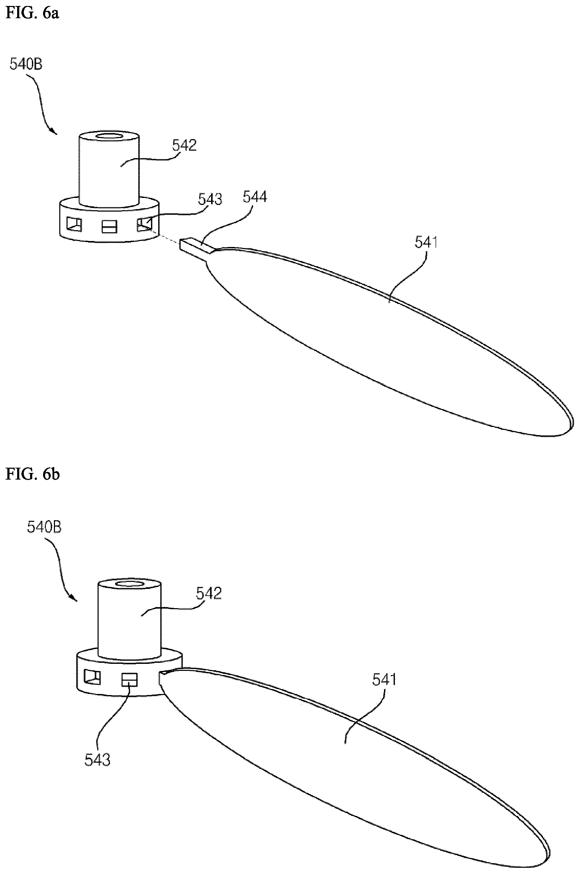

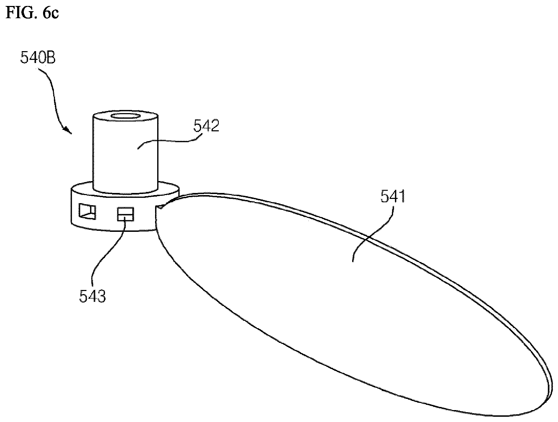

Hereinafter, a structure of the blowing fan 540 for improving the aforementioned problems will be described with reference to FIG. 6. Of course, in the present disclosure, the configuration except for the structure of the blowing fan 540 of FIG. 6 may be any one of FIGS. 4, 8 and 9.

Referring to FIG. 6A, the blowing fan 540B includes the hub 542 selectively coupled to the first coupling portion 532a or the second coupling portion 532b of the rotating shaft 532 and having a plurality of pin coupling portions 543, a plurality of blades 541 generating a flow force, and a fastening pin 544 connected to one end of each blade 541 and coupled to the pin coupling portion 543.

The pin coupling portion 543 may be a recess or a hole recessed in a central axis direction from a circumferential surface of the hub 542. The pin coupling portion 543 may extend in a direction parallel to a horizontal plane perpendicular to the rotating shaft 532. The pin coupling portion 543 may have at least four sides along a circumference based on a direction toward the rotating shaft 532 as an axis. The width and length of the four sides above may all be the same. That is, when viewed from the side perpendicular to the direction of the rotating shaft 532, the pin coupling portion 543 has a shape in which a quadrangular recess extends in a direction perpendicular to the rotating shaft 532. Of course, the pin coupling portion 543 may have four or more surfaces. That is, the pin coupling portion 543 may be defined as a recess having the number of sides corresponding to the fastening pin 544.

The fastening pin 544 may have the number of sides corresponding to the pin coupling portion 543. The fastening pin 544 may have at least four sides along a circumference based on a longitudinal direction of the fastening pin 544 as an axis. The fastening pin 544 may be formed parallel to the longitudinal direction of the blade 541.

In a case in which the fastening pin 544 and the pin coupling portion 543 have a quadrangular shape, when the fastening pin 544 is coupled to the pin coupling portion 543, a coupling angle may be adjusted and an angle of a wing may be easily converted to horizontal and vertical directions.

When the blowing fan 540 is coupled to the second coupling portion 532b, a horizontal area of each blade 541 is smaller than a vertical area of each blade 541. Here, the horizontal area refers to an area visible when the blade 541 is viewed in the horizontal direction, and the vertical area refers to an area visible when the blade 541 is viewed in an upper direction or a lower direction.

That is, when the blowing fan 540 is coupled to the first coupling portion 532a in FIG. 6B, the angle formed by a wing surface connecting a leading edge and a trailing edge of each blade 541 with the horizontal direction may be smaller than the angle formed by the wing surface with the vertical direction.

Although not shown in the drawings, the blowing fan 540 may be fixed by a holder (not shown) such as the fastening pin 544, the pin coupling portion 543, and a screw.

As shown in FIG. 6C, when the blowing fan 540 is coupled to the second coupling portion 532b, the angle formed by the wing surface connecting the leading edge and the trailing edge of each blade 541 with the horizontal direction may be greater than the angle formed by the wing surface with the vertical direction.

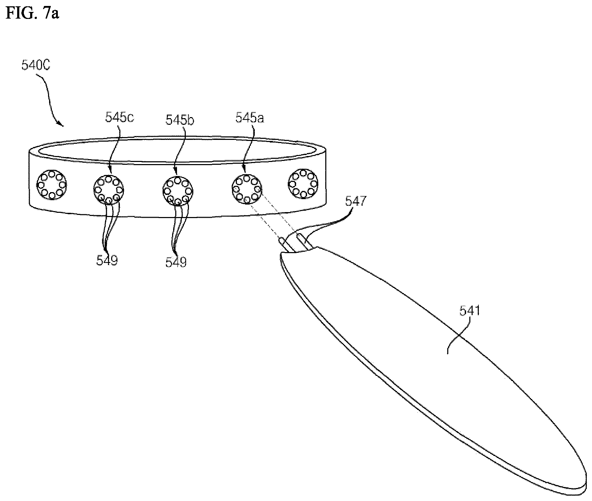

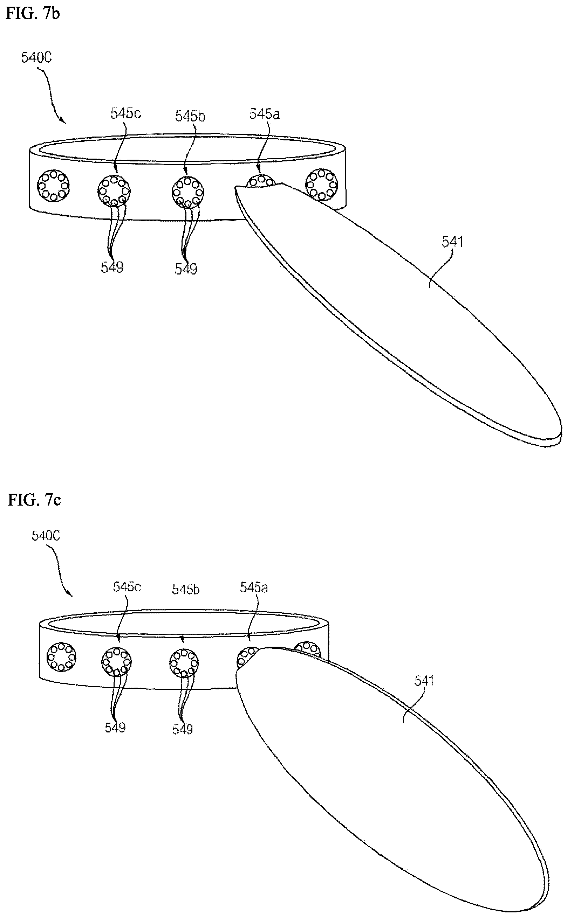

The structure of the blowing fan 540 capable of more precisely adjusting the angle of the blade 541 will be described with reference to FIG. 7. Of course, in the present disclosure, the configuration except for the structure of the blowing fan 540 of FIG. 7 may be any one of FIGS. 4, 8 and 9.

Referring to FIG. 7A, the blowing fan 540C includes the hub 542 selectively coupled to the first coupling portion 532a or the second coupling portion 532b of the rotating shaft 532 and having a plurality of pin coupling portions 543 and a plurality of blades 541 for generating a flow force.

The hub 542 may further include a plurality of insertion grooves 549, and each blade 541 may include at least two pins inserted into the insertion groove 549.

The plurality of insertion grooves 549 may be arranged to be spaced apart from each other along a circumference of the hub 542 based on a direction intersecting the rotating shaft 532 as a certain axis. The plurality of insertion grooves 549 are arranged at the same pitch on a circular track centering on a certain axis perpendicular to the rotating shaft 532 on the circumferential surface of the hub 542. A plurality of insertion grooves 549 arranged around the same axis may be defined as one insertion groove group 545. A plurality of insertion groove groups 545a, 545b, and 545c may be arranged along the circumferential surface of the hub 542.

At least two insertion pins are formed at one end of each blade 541. The two insertion pins are spaced apart at the same distance as a diameter of the circumference defined by the insertion groove 549 and are inserted into the insertion groove 549. That is, the two insertion pins may be coupled to the insertion groove group 545 by adjusting the angle of the blade 541.

That is, when the blowing fan 540 is coupled to the first coupling portion 532a in FIG. 7B, the angle formed by the wing surface connecting the leading edge and the trailing edge of each blade 541 with the horizontal direction may be smaller than the angle formed buy the wing surface with the vertical direction.

As shown in FIG. 7C, when the blowing fan 540 is coupled to the second coupling portion 532b, the angle formed by the wing surface connecting the leading edge and the trailing edge of each blade 541 with the horizontal direction may be greater than the angle formed by the wing surface with the vertical direction.

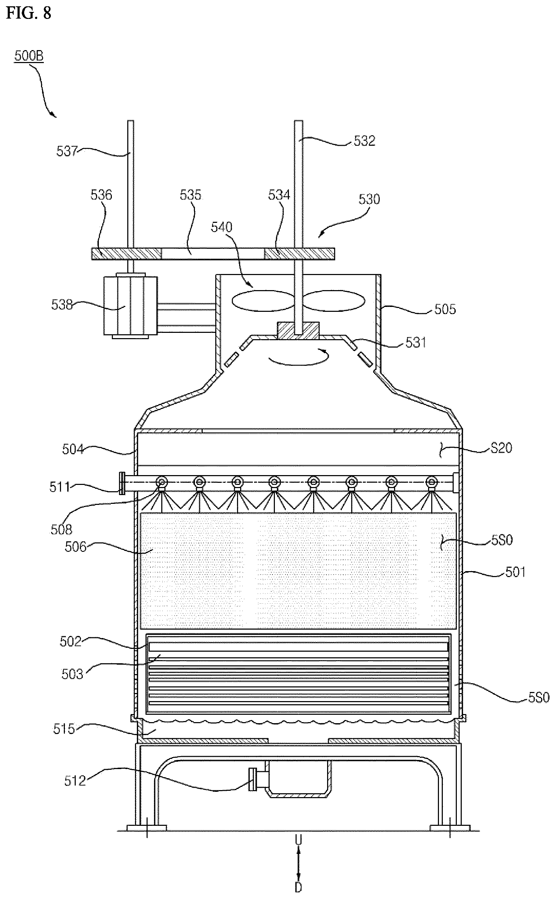

Hereinafter, a structure in which the position of the belt 535 connecting the power generator motor 538 to the blowing fan 540 is changed will be described with reference to FIG. 8. Of course, in the present disclosure, the configuration except for the positions of the first pulley 536 and the second pulley 534 of FIG. 8 may be any one of FIGS. 4 to 7.

Referring to FIG. 8, heights of the first pulley 536 and the second pulley 534 may be higher than the first coupling portion 532a and lower than the second coupling portion 532b. Since the first pulley 536 and the second pulley 534 are not disposed to be biased toward one side from the rotating shaft 532, vibration and energy loss occurring in power transmission may be reduced.

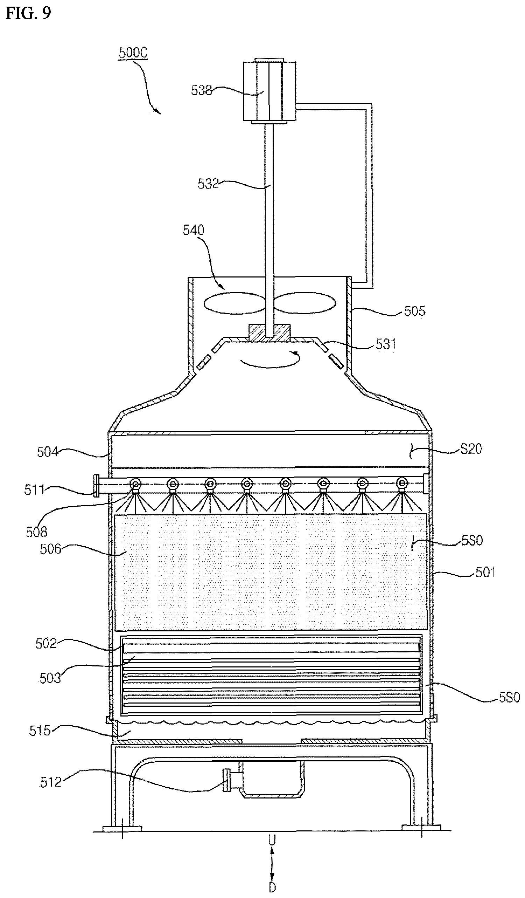

Hereinafter, a structure in which the power generator motor 538 and the blowing fan 540 are directly shaft-coupled will be described with reference to FIG. 9. Of course, in the present disclosure, the configuration other than the configuration described in FIG. 9 may be any one of FIGS. 4 to 7.

Referring to FIG. 9, the power generator motor 538 is shaft-coupled to the rotating shaft 532. The embodiment of FIG. 9 has an advantage that the pulley and the belt 535 may be omitted.

While the invention has been described with reference to the embodiments, the invention is not limited to the specific embodiments described above, and it will be understood by those skilled in the related art that various modifications and variations may be made without departing from the scope of the invention as defined by the appended claims.

## Claims

1. A cooling tower (500) comprising:
a casing (503) forming an air supply region (S10), an exhaust region (S20) and a heat exchange region (S30);
an air supply port (502) communicating with the air supply region (S10) and formed in the casing (530);
an exhaust port (504) communicating with the exhaust region (S20) and formed in the casing (530);
a heat exchanger (S30) disposed in the heat exchange region (S20); and
a blowing and power generating unit (530) providing a flow force to the air supply region (S10) and the exhaust region (S20) and generating power by an external force,
wherein the blowing and power generating unit (530) includes:
a blowing fan (540);
a rotating shaft (532) having a first coupling portion (532a) and a second coupling portion (532b) to which the blowing fan (540) is coupled; and
a power generator motor (538) rotating the rotating shaft (532) or generating power according to rotation of the rotating shaft (532),
**characterized in that**
the blowing fan (540) includes:
a hub (542) selectively coupled to the first coupling portion (532a) or the second coupling portion (532b) of the rotating shaft (532); and
a plurality of blades (541) coupled to the hub (542) to generate a flow force.

2. The cooling tower (500) of claim 1, wherein the first coupling portion (532a) is located inside the casing (503), and the second coupling portion (532b) is located outside the casing (503), wherein optionally the second coupling portion (532b) is located higher than the first coupling portion (532a).

3. The cooling tower (500) of claim 1 or 2, wherein the rotating shaft (532) is disposed to be parallel to a vertical direction.

4. The cooling tower (500) of any one of claims 1 to 3, wherein a portion of the rotating shaft (532) is located inside the casing (503), and another portion of the rotating shaft (532) is located outside the casing (503).

5. The cooling tower (500) of any one of claims 1 to 4, wherein the first coupling portion (532a) and the second coupling portion (532b) include a coupling groove to which the blowing fan (540) is coupled.

6. The cooling tower (500) of any one of claims 1 to 5, wherein the first coupling portion (532a) and the second coupling portion (532b) include a coupling groove to which a fan coupling member (539) passing through the blowing fan (540) is coupled.

7. The cooling tower (500) of any one of claims 1 to 6, wherein the power generator motor (538) is coupled to the rotating shaft (532).

8. The cooling tower (500) of any one of claims 1 to 7, further comprising:
a first pulley (536) shaft-coupled the power generator motor (538);
a second pulley (534) shaft-coupled to the rotating shaft (532); and
a belt (535) coupled to the first pulley (536) and the second pulley (534) to provide a rotational force between the first pulley (536) and the second pulley (534).

9. The cooling tower (500) of claim 8, wherein:
a height of the first pulley (536) and the second pulley (534) is higher than that of the first coupling portion (532a) and the second coupling portion (532b), or
a height of the first pulley (536) and the second pulley (534) is higher than the first coupling portion (532a) and lower than the second coupling portion (532b).

10. The cooling tower (500) of any one of claims 1 to 9, wherein the first coupling portion (532a) is located inside the casing (503), and the first pulley (536), the second pulley (534), and the second coupling portion (532b) are located outside the casing (503).

11. The cooling tower (500) of any one of claims 1 to 10, wherein the blowing fan (540) is coupled to the first coupling portion (532a) when heat exchange is required in the heat exchanger (S30), and coupled to the second coupling portion (532b) when heat exchange is not required in the heat exchanger (S30).

12. The cooling tower (500) of any one of claims 1 to 11, wherein the hub (542) has a plurality of pin coupling portions (543), and a fastening pin (544) connected to one end of each blade (541) and coupled to the pin coupling portion (543).

13. The cooling tower (500) of claim 12, wherein:
the fastening pin (544) has at least four surfaces along a circumference with a longitudinal direction of the fastening pin (544) as an axis, and the pin coupling portion (543) is a groove having a number of surfaces corresponding to the fastening pin (544), and/or
wherein, when the blowing fan (540) is coupled to the second coupling portion (532b), a horizontal area of each of the blades (541) is smaller than a vertical area of each of the blades (541).

14. The cooling tower of any one of claims 1 to 13, wherein:
the blowing fan (540) further includes a fan fastening member fastened to the first coupling portion (532a) or the second coupling portion (532b) by passing through the hub (542), and/or
the hub (542) further includes a plurality of insertion grooves (549) arranged to be spaced apart from each other along a circumference having a certain axis in a direction intersecting the rotating shaft (532), and each blade (541) further includes at least two insertion pins spaced apart from each other by a separation distance that is the same as a diameter of a circumference defined by the insertion groove (549) and inserted into the insertion groove (549).

## Patentansprüche

1. Kühlturm (500), aufweisend:
ein Gehäuse (503), das einen Luftzufuhrbereich (S10), einen Abluftbereich (S20) und einen Wärmeaustauschbereich (S30) ausbildet;
eine Luftzufuhröffnung (502), die mit dem Luftzufuhrbereich (S10) in Verbindung steht und in dem Gehäuse (530) ausgebildet ist;
eine Abluftöffnung (504), die mit dem Abluftbereich (S20) in Verbindung steht und in dem Gehäuse (530) ausgebildet ist;
einen Wärmetauscher (S30), der in dem Wärmeaustauschbereich (S20) angebracht ist; und
eine Gebläse- und Energieerzeugungseinheit (530), die eine Strömungskraft an den Luftzufuhrbereich (S10) und den Abluftbereich (S20) bereitstellt und durch eine externe Kraft Energie erzeugt,
wobei die Gebläse- und Energieerzeugungseinheit (530) Folgendes aufweist:
einen Gebläselüfter (540);
eine Drehwelle (532), die einen ersten Kopplungsabschnitt (532a) und einen zweiten Kopplungsabschnitt (532b) aufweist, mit dem der Gebläselüfter (540) gekoppelt ist; und
einen Stromerzeugermotor (538), der die Drehwelle (532) dreht oder entsprechend der Drehung der Drehwelle (532) Strom erzeugt,
**dadurch gekennzeichnet, dass**
der Gebläselüfter (540) aufweist:
eine Nabe (542), die mit dem ersten Kopplungsabschnitt (532a) oder dem zweiten Kopplungsabschnitt (532b) der Drehwelle (532) selektiv gekoppelt ist; und
mehrere Flügel (541), die mit der Nabe (542) gekoppelt sind, um eine Strömungskraft zu erzeugen.

2. Kühlturm (500) nach Anspruch 1, wobei sich der erste Kopplungsabschnitt (532a) innerhalb des Gehäuses (503) befindet, und sich der zweite Kopplungsabschnitt (532b) außerhalb des Gehäuses (503) befindet wobei sich der zweite Kopplungsabschnitt (532b) optional höher als der erste Kopplungsabschnitt (532a) befindet.

3. Kühlturm (500) nach Anspruch 1 oder 2, wobei die Drehwelle (532) zu einer vertikalen Richtung parallel angebracht ist.

4. Kühlturm (500) nach einem der Ansprüche 1 bis 3, wobei sich ein Abschnitt der Drehwelle (532) innerhalb des Gehäuses (503) befindet und sich ein anderer Abschnitt der Drehwelle (532) außerhalb des Gehäuses (503) befindet.

5. Kühlturm (500) nach einem der Ansprüche 1 bis 4, wobei der erste Kopplungsabschnitt (532a) und der zweite Kopplungsabschnitt (532b) eine Kupplungsnut aufweisen, mit der der Gebläselüfter (540) gekoppelt ist.

6. Kühlturm (500) nach einem der Ansprüche 1 bis 5, wobei der erste Kopplungsabschnitt (532a) und der zweite Kopplungsabschnitt (532b) eine Kupplungsnut aufweisen, an die ein Gebläsekupplungselement (539) gekoppelt ist, das durch den Gebläselüfter (540) hindurchtritt.

7. Kühlturm (500) nach einem der Ansprüche 1 bis 6, wobei der Stromerzeugermotor (538) mit der Drehwelle (532) gekoppelt ist.

8. Kühlturm (500) nach einem der Ansprüche 1 bis 7, ferner aufweisend:
eine erste Riemenscheibe (536), die mit dem Stromerzeugermotor (538) wellengekoppelt ist;
eine zweite Riemenscheibe (534), die mit der Drehwelle (532) wellengekoppelt ist; und
einen Riemen (535), der mit der ersten Riemenscheibe (536) und der zweiten Riemenscheibe (534) gekoppelt ist, um eine Drehkraft zwischen der ersten Riemenscheibe (536) und der zweiten Riemenscheibe (534) bereitzustellen.

9. Kühlturm (500) nach Anspruch 8, wobei:
eine Höhe der ersten Riemenscheibe (536) und der zweiten Riemenscheibe (534) höher als die des ersten Kopplungsabschnitts (532a) und des zweiten Kopplungsabschnitts (532b) ist, oder
eine Höhe der ersten Riemenscheibe (536) und der zweiten Riemenscheibe (534) höher als der erste Kopplungsabschnitt (532a) und niedriger als der zweite Kopplungsabschnitt (532b) ist.

10. Kühlturm (500) nach einem der Ansprüche 1 bis 9, wobei sich der erste Kopplungsabschnitt (532a) innerhalb des Gehäuses (503) befindet und sich die erste Riemenscheibe (536), die zweite Riemenscheibe (534) und der zweite Kopplungsabschnitt (532b) außerhalb des Gehäuses (503) befindet.

11. Kühlturm (500) nach einem der Ansprüche 1 bis 10, wobei der Gebläselüfter (540) mit dem ersten Kopplungsabschnitt (532a) gekoppelt ist, wenn ein Wärmeaustausch in dem Wärmetauscher (S30) erforderlich ist, und mit dem zweiten Kopplungsabschnitt (532b) gekoppelt ist, wenn kein Wärmeaustausch in dem Wärmetauscher (S30) erforderlich ist.

12. Kühlturm (500) nach einem der Ansprüche 1 bis 11, wobei die Nabe (542) mehrere Stiftkopplungsabschnitte (543) und einen Befestigungsstift (544) aufweist, der mit einem Ende jedes Flügels (541) verbunden und mit dem Stiftkopplungsabschnitt (543) gekoppelt ist.

13. Kühlturm (500) nach Anspruch 12, wobei:
der Befestigungsstift (544) mindestens vier Flächen entlang eines Umfangs mit einer Längsrichtung des Befestigungsstifts (544) als eine Achse aufweist, und der Stiftkopplungsabschnitt (543) eine Nut mit einer Anzahl von Flächen ist, die dem Befestigungsstift (544) entsprechen, und/oder
wobei, wenn der Gebläselüfter (540) mit dem zweiten Kopplungsabschnitt (532b) gekoppelt ist, eine horizontale Fläche jedes der Flügel (541) kleiner als eine vertikale Fläche jedes der Flügel (541) ist.

14. Kühlturm nach einem der Ansprüche 1 bis 13, wobei:
der Gebläselüfter (540) ferner ein Gebläsebefestigungselement aufweist, das an dem ersten Kopplungsabschnitt (532a) oder dem zweiten Kopplungsabschnitt (532b) befestigt ist, indem es durch die Nabe (542) hindurchtritt, und/oder
die Nabe (542) ferner mehrere Einschubnuten (549) aufweist, die so angeordnet sind, dass sie entlang eines Umfangs, der eine bestimmte Achse in einer die Drehwelle (532) schneidenden Richtung aufweist, voneinander beabstandet sind, und jeder Flügel (541) ferner mindestens zwei Einschubstifte aufweist, die voneinander durch einen Trennungsabstand beabstandet sind, der gleich einem Durchmesser eines Umfangs ist, der durch die Einschubnut (549) definiert ist, und in die Einschubnut (549) eingesetzt sind.

## Revendications

1. Tour de refroidissement (500) comprenant :
un carter (503) formant une zone d'alimentation en air (S10), une zone d'échappement (S20) et une zone d'échange de chaleur (S30) ;
un orifice d'alimentation en air (502) communiquant avec la région d'alimentation en air (S10) et formé dans le carter (530) ;
un orifice d'échappement (504) communiquant avec la région d'échappement (S20) et formé dans le carter (530) ;
un échangeur de chaleur (S30) disposé dans la région d'échange de chaleur (S20) ; et
une unité de soufflage et de génération d'énergie (530) fournissant une force d'écoulement à la région d'alimentation en air (S10) et à la région d'échappement (S20) et générant de l'énergie par une force externe,
dans laquelle l'unité de soufflage et de génération d'énergie (530) comporte :
un ventilateur soufflant (540) ;
un arbre de rotation (532) présentant une première partie de couplage (532a) et une deuxième partie de couplage (532b) auxquelles le ventilateur soufflant (540) est couplé ; et
un moteur générateur de puissance (538) faisant tourner l'arbre de rotation (532) ou générant de la puissance en fonction de la rotation de l'arbre de rotation (532),
**caractérisée en ce que**
le ventilateur soufflant (540) comporte :
un moyeu (542) couplé sélectivement à la première partie de couplage (532a) ou à la deuxième partie de couplage (532b) de l'arbre de rotation (532) ; et
une pluralité de pales (541) couplées au moyeu (542) pour générer une force d'écoulement.

2. Tour de refroidissement (500) selon la revendication 1, dans laquelle la première partie de couplage (532a) est située à l'intérieur du carter (503), et la deuxième partie de couplage (532b) est située à l'extérieur du carter (503), dans laquelle, en option, la deuxième partie de couplage (532b) est située plus haut que la première partie de couplage (532a).

3. Tour de refroidissement (500) selon la revendication 1 ou 2, dans laquelle l'arbre de rotation (532) est disposé de manière à être parallèle à une direction verticale.

4. Tour de refroidissement (500) selon l'une quelconque des revendications 1 à 3, dans laquelle une partie de l'arbre de rotation (532) est située à l'intérieur du carter (503), et une autre partie de l'arbre de rotation (532) est située à l'extérieur du carter (503).

5. Tour de refroidissement (500) selon l'une quelconque des revendications 1 à 4, dans laquelle la première partie de couplage (532a) et la deuxième partie de couplage (532b) comprennent une rainure de couplage à laquelle le ventilateur soufflant (540) est couplé.

6. Tour de refroidissement (500) selon l'une quelconque des revendications 1 à 5, dans laquelle la première partie de couplage (532a) et la deuxième partie de couplage (532b) comprennent une rainure de couplage à laquelle un élément de couplage de ventilateur (539) passant à travers le ventilateur soufflant (540) est couplé.

7. Tour de refroidissement (500) selon l'une quelconque des revendications 1 à 6, dans laquelle le moteur de générateur d'énergie (538) est couplé à l'arbre de rotation (532).

8. Tour de refroidissement (500) selon l'une quelconque des revendications 1 à 7, comprenant en outre :
une première poulie (536) couplée par un arbre au moteur de générateur de puissance (538) ;
une deuxième poulie (534) couplée par un arbre à l'arbre de rotation (532) ; et
une courroie (535) couplée à la première poulie (536) et à la deuxième poulie (534) pour fournir une force de rotation entre la première poulie (536) et la deuxième poulie (534).

9. Tour de refroidissement (500) selon la revendication 8, dans laquelle :
une hauteur de la première poulie (536) et de la deuxième poulie (534) est supérieure à celle de la première partie de couplage (532a) et de la deuxième partie de couplage (532b), ou
une hauteur de la première poulie (536) et de la deuxième poulie (534) est supérieure à la première partie de couplage (532a) et est inférieure à la deuxième partie de couplage (532b).

10. Tour de refroidissement (500) selon l'une quelconque des revendications 1 à 9, dans laquelle la première partie de couplage (532a) est située à l'intérieur du carter (503), et la première poulie (536), la deuxième poulie (534) et la deuxième partie de couplage (532b) sont situées à l'extérieur du carter (503).

11. Tour de refroidissement (500) selon l'une quelconque des revendications 1 à 10, dans laquelle le ventilateur soufflant (540) est couplé à la première partie de couplage (532a) lorsqu'un échange de chaleur est requis dans l'échangeur de chaleur (S30), et est couplé à la deuxième partie de couplage (532b) lorsque l'échange de chaleur n'est pas requis dans l'échangeur de chaleur (S30).

12. Tour de refroidissement (500) selon l'une quelconque des revendications 1 à 11, dans laquelle le moyeu (542) présente une pluralité de parties de couplage de broche (543), et une broche de fixation (544) reliée à une extrémité de chaque pale (541) et couplée à la partie de couplage de broche (543).

13. Tour de refroidissement (500) selon la revendication 12, dans laquelle :
la broche de fixation (544) présente au moins quatre surfaces le long d'une circonférence avec une direction longitudinale de la broche de fixation (544) comme axe, et la partie de couplage de broche (543) est une rainure présentant un nombre de surfaces correspondant à la broche de fixation (544), et/ou
dans laquelle, lorsque le ventilateur soufflant (540) est couplé à la deuxième partie de couplage (532b), une surface horizontale de chacune des pales (541) est plus petite qu'une surface verticale de chacune des pales (541).

14. Tour de refroidissement selon l'une quelconque des revendications 1 à 13, dans laquelle :
le ventilateur soufflant (540) comporte en outre un élément de fixation de ventilateur fixé à la première partie de couplage (532a) ou à la deuxième partie de couplage (532b) en passant à travers le moyeu (542), et/ou
le moyeu (542) comporte en outre une pluralité de rainures d'insertion (549) disposées de manière à être espacées les unes des autres le long d'une circonférence présentant un certain axe dans une direction coupant l'arbre de rotation (532), et chaque pale (541) comporte en outre au moins deux broches d'insertion espacées l'une de l'autre d'une distance de séparation qui est identique à un diamètre d'une circonférence définie par la rainure d'insertion (549) et insérées dans la rainure d'insertion (549).
